# EUROPÄISCHE PATENTANMELDUNG

(11) **EP 3 418 653 A2**
(43) Veröffentlichungstag der Anmeldung: **26.12.2018**
(21) Anmeldenummer: 18000530.8
(22) Anmeldetag: 18.06.2018
(51) Int. Cl.: F25B 21/02, F25B 25/00

(54) **VORRICHTUNG ZUM TEMPERIEREN ZUMINDEST EINES TEMPERIERBAREN VOLUMENS, TEMPERIERBARES VOLUMEN MIT ZUMINDEST EINER SOLCHEN VORRICHTUNG SOWIE FAHRZEUG MIT ZUMINDEST EINER SOLCHEN VORRICHTUNG**

(30) Priorität: 23.06.2017 DE 102017005915
(71) Anmelder: Voss Automotive GmbH, 51688 Wipperfürth (DE)
(72) Erfinder: Schwarzkopf, Otfried, 51515 Kürten (DE); Kolberg, Ralf, 50733 Kürten (DE); Steinhoff, Pascal, 51647 Gummersbach (DE)
(74) Vertreter: Rebbereh, Cornelia

(57) **Zusammenfassung**

Bei einer Vorrichtung (1) zum Temperieren zumindest eines temperierbaren oder zu temperierenden Volumens (2), umfassend zumindest eine das temperierbare Volumen (2) umgrenzende Wandung (3), ist eine Trennung von Kühl- und Heizfunktion der Vorrichtung (1) zum Temperieren vorgesehen, wobei die zumindest eine Wandung (3) zum Beheizen des zumindest einen temperierbaren oder zu temperierenden Volumens (2) beheizbar ist und zumindest eine Kühleinrichtung (4) zum Kühlen des temperierbaren Volumens (2) vorgesehen ist.

## Beschreibung

Die Erfindung betrifft eine Vorrichtung zum Temperieren zumindest eines temperierbaren oder zu temperierenden Volumens, umfassend zumindest eine das temperierbare Volumen umgrenzende Wandung, ein von zumindest einer Wandung umgrenztes temperierbares oder zu temperierendes Volumen, insbesondere Becheraufnahme zur Aufnahme zumindest eines Bechers, sowie ein Fahrzeug mit zumindest einer solchen Vorrichtung bzw. zumindest einem solchen temperierbaren Volumen.

Vorrichtungen zum Temperieren zumindest eines temperierbaren Volumens und Fahrzeuge mit einer solchen Vorrichtung sind im Stand der Technik bekannt. Aufgrund gestiegener Komfortanforderungen, insbesondere bei Fahrzeugen, wie Kraftfahrzeugen, besteht heutzutage der Wunsch nach temperierten, also beheizten bzw. gekühlten, Getränkehaltern im Fahrzeuginnenraum. Für ein solches Beheizen und Kühlen von Getränkehaltem ist es insbesondere bekannt, ein thermoelektrisches Element zu verwenden, das mittels elektrischer Energie sowohl Kühl- als auch Heizeffekte erzielt. Als ein solches thermoelektrisches Element wird zumeist ein Peltier-Element verwendet, das spannungsabhängig eine schaltbare Heiß- und Kaltseite ausbildet. Soll mittels eines solchen Peltier-Elements eine Kühlung des Getränkehalters bzw. von dessen inneren thermischem Volumen vorgenommen werden, muss auf der gegenüberliegenden Seite des Peltier-Elements Wärme abgeführt werden, um eine gegenüber der Umgebung signifikant kühlere Seite als Kälte- oder Kaltseite auszubilden. Der Aufbau eines solchen Peltier-Elements ist beispielsweise in der WO 2016/050588 A1 offenbart. Ein solches Peltier-Element weist insbesondere eine elektrisch isolierende Ober- und Unterschicht auf, die beispielsweise aus einem keramischen Werkstoff, wie Al₂O₃ besteht. Zum Temperieren mittels solcher Peltier-Elemente sind zwei Systemansätze bekannt, zum einen das Vorsehen eines Luft- Kühlkreislaufs und zum anderen eines Flüssigkeitskreislaufs und einer Kopplung an einen vorhandenen Kühlkreislauf oder Chiller.

Bei Vorsehen eines Luft-Kühlkreislaufs wird ein Wärmeabtransport durch Ankopplung einer Wärmesenke an die Heißseite des Peltier-Elements bewirkt. Diese Wärmesenke wird mit Luft umströmt, um einen Wärmeabtransport zu ermöglichen, so dass ein Kühlen der Heißseite des Peltier-Elements nach dem Prinzip einer Wärmepumpe erfolgt.

Ein Beispiel für eine Behälteraufnahme bzw. einen Becherhalter, der unter Verwendung eines solchen Luft-Kühlkreislaufs arbeitet, ist aus der DE 10 2014 115 968 A1 bekannt. Hierbei ist ein Kühl- und Heizbecherhalter vorgesehen, der eine Mehrzahl von Haltekörpern mit einer Behälterform, eine Mehrzahl von thermoelektrischen Elementen, die jeweils seitlich der Mehrzahl von Haltekörpern vorgesehen sind, ein Wärmeabführteil, das angebracht ist, um thermisch mit einer Wärmeabführfläche der Mehrzahl von thermoelektrischen Elementen verbunden zu sein, ein Gehäuse, das das Wärmeabführteil aufnimmt und einen Lufteinlass an einem oberen Abschnitt desselben, und ein Gebläse aufweist, das in dem Gehäuse aufgenommen und an einem oberen Abschnitt oder einem unteren Abschnitt des Wärmeabführteils angeordnet ist, um es der von einem abgebogenen Teil ausgegebenen und durch den Lufteinlass eingeleiteten Luft zu ermöglichen, Wärme auszutauschen. Zwischen der Wärmeabführfläche eines jeden thermoelektrischen Elements und dem Wärmeabführteil ist ein Wärmerohr vorgesehen. Als nachteilig erweisen sich bei Verwendung eines solchen Luftkühlkreislaufs das Abblasen von Wärme in den Innenraum sowie thermisch am Innenraum angekoppelte Bereiche des Fahrzeugs, was insbesondere im Falle eines Kühlens des Getränkehalters zu einem unangenehmen Anstieg der Temperatur in der Mittelkonsole des Fahrzeugs führt. Um dem entgegenzuwirken, ist das Vorsehen einer zusätzlichen Isolation erforderlich, was ebenfalls zu zusätzlichen Kosten führt. Ferner ist das Beheizen des Getränkehalters mittels Peltier-Elementen nicht effektiv im Vergleich zu konventionellen Heizschleifen. Ferner ist auch die Möglichkeit einer Wärmeabfuhr durch erzwungene Konvektion lediglich begrenzt möglich. Als störend erweist sich auch die Lautstärke der Kühlung durch Betrieb des Lüfters bzw. aufgrund des entsprechenden Luftstroms insbesondere beim Start des Kühlvorgangs, vor allem, sobald eine maximale Wärmeabfuhr erfolgen muss, um das System zu kühlen.

Eine Möglichkeit, um die Kühleffizienz zu steigern und die Problematik der Innenraumerwärmung eines Fahrzeugs beim Kühlbetrieb eines solchen Getränkehalters zu umgehen bzw. zu überwinden, ist das Implementieren eines Flüssigkeitskreislaufs mit Wärmetauscher am Peltier-Element. Hierdurch kann gezielt Wärme abtransportiert und an geeigneter Stelle abgegeben werden. Die Wärmeabgabe kann sowohl an die Umgebung erfolgen, wobei hierfür ein separater Chiller-Kreislauf vorgesehen werden kann. Ferner ist eine Wärmeabgabe gekoppelt an vorhandene Kühl- und Heizkreisläufe im Fahrzeug möglich. Das Vorsehen einer mit einem separaten Chiller-Kreislauf versehenen Anordnung ist beispielsweise aus der DE 11 2014 001 421 T5 bekannt. Hierbei weist eine thermisch konditionierte Vorrichtung eine Aufnahme auf, die dafür konfiguriert ist, einen Gegenstand aufzunehmen. Die Aufnahme weist eine Wand mit einer Außenfläche auf und die Aufnahme zumindest ein wärmeleitfähiges Material. Die thermisch konditionierte Vorrichtung ist ferner mit einer thermoelektrischen Vorrichtung versehen, die an der Außenfläche der Wand der Aufnahme befestigt ist. Ferner ist ein Flüssigkeitskreis- Wärmeaustauschsystem mit einer Kühlplatte benachbart zur thermoelektrischen Vorrichtung vorgesehen, wobei die thermoelektrische Vorrichtung zwischen der Wand der Aufnahme und der Kühlseite angeordnet ist. Die thermoelektrische Vorrichtung ist sowohl bezüglich der Aufnahme als auch bezüglich der Kühlplatte wärmeleitfähig. Die Vorrichtung umfasst einen Getränkehalter bzw. Becherhalter zum Aufnehmen eines Getränkebehälters bzw. Bechers. Die Kühlplatte weist einen Einlass und einen Auslass sowie einen sich zwischen dem Einlass und dem Auslass erstreckenden Flüssigkeitskanal zum Durchströmen mit einer Flüssigkeit auf. Das Flüssigkeitskreis-Wärmeaustauschsystem umfasst einen Sekundärwärmetauscher, eine Pumpe und eine Fluidleitung. Über eine Wärmeaustauscheinheit wird Wärme von der thermoelektrischen Vorrichtung weggeleitet, wobei die Wärmeaustauscheinheit einen Flüssigkeitskanal aufweist, der von einer Flüssigkeit durchströmt wird, die zum Entziehen von Wärme von der thermoelektrischen Vorrichtung während deren Gebrauchs dient.

Auch bei Vorsehen eines solchen Flüssigkeitskreislaufs und einer Kopplung an vorhandene Kreisläufe oder Chiller zum Abtransport von Wärme von einem Peltier-Element zeigt es sich, dass ein Heizen mit einem Peltier-Element nicht effektiv ist im Vergleich zum Verwenden konventioneller konturnaher Heizschleifen. Auch der Regelungsaufwand beim Heizen mittels eines Peltier-Elements ist hoch aufgrund der hohen Temperaturen des Peltier-Elements. Ferner müssen Fahrzeuginsassen vor Verbrennungen, die sie sich am Peltier-Element bzw. in dessen Nähe aufgrund der ggf. hohen Temperaturen zuziehen können, geschützt werden. Zum Regeln werden ferner zusätzliche Sensorelemente benötigt sowie ein damit verbundener Entwicklungsaufwand in Bezug auf eine geeignete Regelung eines solchen Peltier-Elements, wenn dieses zum Beheizen verwendet werden soll.

Der vorliegenden Erfindung liegt daher die Aufgabe zugrunde, eine Vorrichtung zum Temperieren zumindest eines temperierbaren oder zu temperierenden Volumens, umfassend zumindest eine das temperierbare Volumen umgrenzende Wandung, sowie ein Fahrzeug mit einer solchen Vorrichtung und ein temperierbares Volumen, das durch eine solche Vorrichtung temperiert werden kann, vorzusehen, wobei der Regelungsbedarf im Falle eines Beheizens des temperierbaren Volumens gegenüber dem Stand der Technik deutlich verringert, die Effizienz der Temperierung jedoch gesteigert und damit die benötigte Gesamtenergie bei gleicher Effektivleistung verringert werden soll.

Die Aufgabe wird für eine Vorrichtung nach dem Oberbegriff des Anspruchs 1 dadurch gelöst, dass eine Trennung von Kühl- und Heizfunktion der Vorrichtung vorgesehen ist, wobei die zumindest eine Wandung zum Beheizen des zumindest einen temperierbaren oder zu temperierenden Volumens beheizbar ist und zumindest eine Kühleinrichtung zum Kühlen des temperierbaren Volumens vorgesehen ist. Für ein von zumindest einer Wandung umgrenztes temperierbares oder zu temperierendes Volumen, insbesondere eine Behälteraufnahme zur Aufnahme zumindest eines Behälters, wird die Aufgabe dadurch gelöst, dass zum Beheizen und Kühlen des temperierbaren oder zu temperierenden Volumens zumindest eine solche Vorrichtung vorgesehen ist. Für ein Fahrzeug wird die Aufgabe dadurch gelöst, dass dieses mit zumindest einer solchen Vorrichtung zum Temperieren und/oder zumindest einem solchen temperierbaren Volumen versehen ist. Weiterbildungen der Erfindung sind in den abhängigen Ansprüchen definiert.

Dadurch wird eine Vorrichtung zum Temperieren zumindest eines temperierbaren oder zu temperierenden Volumens geschaffen, das von zumindest einer Wandung umgrenzt ist, bei der die Kühlfunktion und die Heizfunktion der Vorrichtung zum Kühlen bzw. Beheizen, also Temperieren, des zumindest einen temperierbaren Volumens voneinander getrennt sind. Zum Beheizen dient die zumindest eine Wandung, die das temperierbare Volumen umgrenzt, während zum Kühlen zusätzlich zumindest eine Kühleinrichtung vorgesehen ist. Da dementsprechend nicht mehr, wie im Stand der Technik, ein Peltier-Element bzw. thermoelektrisches Element zum Beheizen des temperierbaren Volumens vorgesehen wird, sondern eine separate Heizeinrichtung, die in die Wandung, die das temperierbare Volumen umgrenzt, integriert ist, kann der Regelungsbedarf im Falle eines Beheizens gegenüber dem Stand der Technik deutlich verringert werden. Ferner ist hierdurch eine Effizienzsteigerung des Temperierens des temperierbaren Volumens möglich. Bei gleicher Effektivleistung kann dabei die Gesamtenergie, die zum Temperieren, insbesondere zum Beheizen, benötigt wird, gegenüber den Lösungen des Standes der Technik verringert werden. Das zumindest eine zu temperierende bzw. temperierbare Volumen, also die thermische Masse, die durch die Vorrichtung temperiert werden soll, wird somit über die zumindest eine das temperierbare Volumen umgrenzende Wandung beheizt. Ferner ist zumindest eine Kontaktfläche oder ein Kontaktbereich zum temperierbaren Volumen vorgesehen, über die bzw. über den die zumindest eine Kühleinrichtung mit diesem in Kontakt tritt, um eine Kühlung des temperierbaren Volumens vornehmen zu können. Das Beheizen des temperierbaren Volumens und das Kühlen von diesem können völlig unabhängig voneinander erfolgen, somit zumindest die eine Kühleinrichtung unabhängig von der Einrichtung zum Beheizen des zumindest einen temperierbaren Volumens betrieben werden.

Die Wandung ist insbesondere Teil einer Behälteraufnahme oder eines Behälterhalters und das temperierbare oder zu temperierende Volumen die thermische Masse, die von der Wandung umgrenzt wird und temperiert werden soll, somit z.B. ein Behälter, wie ein Getränkebecher, innerhalb der Behälteraufnahme, mit im Getränkebecher aufgenommenem Getränk.

Die Vorrichtung zum Temperieren kann vorteilhaft mit zumindest einem Mittel zur Abfuhr von Wärme und/oder zur Zufuhr von Kälte versehen sein oder werden. Durch ein solches Mittel zur Zufuhr von Wärme erfolgt somit ein Beheizen und durch ein Mittel zur Abfuhr von Wärme und/oder ein Mittel zur Zufuhr von Kälte ein Kühlen des temperierbaren oder zu temperierenden Volumens. Zum Kühlen kann somit einerseits Kälte zugeführt oder andererseits Wärme entzogen werden. Die zumindest eine Kühleinrichtung kann somit sowohl zum Zuführen von Kälte als auch zur Abfuhr von Wärme dienen.

Vorteilhaft umfasst die zumindest eine Kühleinrichtung zumindest ein thermoelektrisches Element, insbesondere Peltier-Element, und zumindest einen Wärmetauscher zum Abführen von Wärme von dem thermoelektrischen Element. Es ist somit eine Kombination aus zumindest einem thermoelektrischen Element und zumindest einem Wärmetauscher vorgesehen, insbesondere sind das zumindest eine thermoelektrische Element und der zumindest eine Wärmetauscher als Einheit ausgebildet. Die Kühleinrichtung tritt in thermischen Kontakt mit dem temperierbaren Volumen bzw. ist thermisch an dieses angekoppelt, um dem temperierbaren Volumen Wärmeenergie zu entziehen und dieses somit zu kühlen. Die zumindest eine Kühleinrichtung steht dementsprechend in thermisch leitfähigem Kontakt mit dem zu temperierenden bzw. temperierbaren Volumen und/oder der zumindest einen das zu temperierende bzw. temperierbare Volumen umgrenzenden Wandung. Insbesondere kann die zumindest eine Kühleinrichtung somit an einen Wandungsabschnitt, der das temperierbare Volumen umgebenden Wandung angegliedert bzw. angekoppelt sein. Der zumindest eine Wärmetauscher der zumindest einen Kühleinrichtung kann beispielsweise als Medium durchströmter Wärmetauscher und/oder Luft-Wärmetauscher ausgebildet sein. Der Wärmetauscher kann hierbei an einen Kühlkreislauf angekoppelt sein, der zumindest eine Fördereinrichtung zum Fördern eines Kühlmediums durch den Kühlkreislauf und zumindest einen zweiten Wärmetauscher, insbesondere einen Chiller, zum Umwandeln der im Kühlmedium aufgenommenen Wärmeenergie und zur Abgabe derselben an die Umgebung umfasst. Als Fördereinrichtung kann beispielsweise eine Pumpe vorgesehen sein, die einen Volumenstrom an Kühlmedium durch den Kühlkreislauf pumpt, wobei das Kühlmedium die von dem thermoelektrischen Element an den ersten Wärmetauscher abgegebene Wärmeenergie zu dem zumindest einen zweiten Wärmetauscher, insbesondere Chiller, transportiert, wobei diese Wärmeenergie dort am zweiten Wärmetauscher bzw. Chiller an die Umgebung oder zumindest einen Sekundärkreislauf abgegeben wird. Ein solcher Sekundärkreislauf ist insbesondere ein Kreislauf, in dem eine Komponente temperiert, z.B. erwärmt werden soll.

Weiter vorteilhaft umfasst die zumindest eine Wandung zum Beheizen des zumindest einen temperierbaren bzw. zu temperierenden Volumens zumindest ein thermisch und/oder elektrisch leitfähiges Material mit darin eingebetteten oder daran befestigten elektrisch leitfähigen Elementen. Die elektrisch leitfähigen Elemente können Widerstandsdraht, Heizleiter, zumindest eine Litze und/oder zumindest ein Leiter und/oder eine Leiterstruktur und/oder zumindest ein Heizband sein. Die elektrisch leitfähigen Elemente können somit in unterschiedlichster Art und Weise ausgebildet und in die zumindest eine Wandung, die das temperierbare Volumen umgrenzt, integriert oder an dieser befestigt sein. Das thermisch leitfähige Material und/oder elektrisch leitfähige Material der Wandung, die das temperierbare Volumen umgrenzt, kann ferner beispielsweise ein leitfähiges Polymermaterial sein. Ein Beheizen der Wandung und somit des von dieser umgrenzten temperierbaren bzw. zu temperierenden Volumens kann somit beispielsweise durch zwei elektrisch isolierte, in einem elektrisch leitfähigen Polymermaterial bzw. Kunststoff eingebettete Leiter realisiert werden. Insbesondere ist ein Einbetten im Rahmen eines Spritzgussverfahrens beim Herstellen der Wandung, somit bei der Bauteilfertigung beispielsweise eines Behälterhalters, der in einem Fahrzeug angeordnet werden soll, möglich. Bei Vorsehen solcher in einen elektrisch leitfähigen Kunststoff eingebetteter gegeneinander isolierter Leiter ist das Ausbilden einer quasi unendlichen Schaltung von Heizwiderständen möglich, wodurch die gesamte Fläche der Wandung beheizt werden kann. Das Beheizen erfolgt somit in direktem Kontakt mit dem zu temperierenden Volumen. Ist die Wandung in Form eines Behälterhalters für Behälter, insbesondere Getränkebehälter, ausgebildet, die in dem Behälterhalter angeordnet werden können, ist das zu erwärmende oder zu beheizende temperierbare Volumen einerseits der Behälter, andererseits insbesondere ein sich im Behälter befindendes Medium, wie beispielsweise ein Heißgetränk, das in dem z.B. becherförmigen Behälter angeordnet ist.

Zum thermischen Isolieren der das temperierbare Volumen umgrenzenden Wandung nach außen in Richtung der Umgebung kann die zumindest eine Wandung zum Beheizen des zumindest einen temperierbaren Volumens außenseitig mit zumindest einer thermischen Isoliereinrichtung versehen sein. Diese kann beispielsweise in Form einer Isolierschicht auf der Außenseite der Wandung bzw. als äußerste Schicht der Wandung vorgesehen sein. Vorteilhaft überdeckt eine solche thermische Isoliereinrichtung jedoch nicht den Bereich, in dem die zumindest eine Kühleinrichtung mit dem temperierbaren Volumen in Kontakt treten soll bzw. tritt. Eine solche Kontaktfläche ist daher vorteilhaft nicht thermisch isoliert, sondern steht in thermischem Kontakt mit dem temperierbaren Volumen.

Weiter vorteilhaft können die elektrischen Leiter bezüglich der Formgebung der zumindest einen das zumindest eine temperierbare Volumen umgrenzenden Wandung konturnah und/oder äquidistant zueinander, untereinander ohne elektrischen Kontakt, in der Wandung angeordnet sein. Die Wandung kann hierbei vorteilhaft aus einem elektrisch leitfähigen Polymermaterial bestehen, in welches die elektrischen Leiter in Form von beispielsweise Leiterdrähten, eingebettet sind. Ein direkter elektrischer Kontakt zwischen den Drähten wird jedoch vermieden. Bei Einbetten der elektrischen Leiter in die Wandung folgen die elektrischen Leiter der Kontur der Wandung und dementsprechend auch der Kontur beispielsweise eines darin aufgenommenen Behälters, werden diesbezüglich also konturnah geformt. Durch eine im Wesentlichen äquidistante Anordnung der elektrischen Leiter, also die Wahl eines etwa gleichen Abstandes der elektrischen Leiter zueinander, kann eine konstante Heizleistung unter Vermeiden von sogenannten Hotspots eingestellt werden. Das Ausbilden von Hotspots, also von Stellen besonders starker Erwärmung, soll üblicherweise vermieden werden. Alternativ zum Anordnen der elektrischen Leiter oder von Heizdrähten in der Wandung bzw. in deren elektrisch leitfähigem Polymermaterial können elektrische Leiter als metallische Formbiegeelemente ausgebildet und in die Wandung eingebettet sein. Auch hierdurch kann das Ausbilden von sogenannten Hotspots vermieden und die Heizleistung entsprechend eingestellt werden. Ferner kann ein elektrischer Widerstandsdraht zum Beheizen innerhalb der Wandung, die das temperierbare Volumen umgrenzt, angeordnet sein.

Als weiter vorteilhaft erweist es sich, wenn das elektrisch leitfähige Polymermaterial der zumindest einen Wandung einen PTC-Effekt zum automatischen Abregeln der Beheizung bei Einreichen einer vorgebbaren Maximaltemperatur zeigt. Beim Beheizen steigt der innere Widerstand zwischen den Leitern bzw. Heizleitern, die in das elektrisch leitfähige Polymermaterial eingebettet sind, mit der Temperatur an, wobei durch den PTC-Effekt das Beheizen automatisch bzw. selbstständig bei Erreichen einer vorgebbaren Maximaltemperatur abregelt. Diese Maximaltemperatur bzw. der Regelungsvorgang kann so gewählt werden, dass zu keiner Zeit eine Gefahr von Verbrennungen für Personen, die die Wandung berühren, besteht, somit die Temperatur unterhalb einer für das Berühren gefährlichen Temperatur gehalten wird. Beispielsweise kann ein Abregeln der Beheizung bei einer Maximaltemperatur von 60 °C oder darunter erfolgen, insbesondere von 55 °C.

Der zweite Wärmetauscher, insbesondere Chiller, zum Abführen der von dem thermoelektrischen Element aufgenommenen Wärme an die Umgebung kann mit anderen Temperierkreisläufen gekoppelt sein und die aufgenommene Wärme über diese abgeben, also nicht direkt an die Umgebung. Beispielsweise kann mit der hier abgegebenen Wärme eine andere Einrichtung, die an einen solchen Temperierkreislauf angeschlossen ist, erwärmt werden.

Die Kontaktfläche zum temperierbaren Volumen, über die die zumindest eine Kühleinrichtung mit dem temperierbaren Volumen in Kontakt tritt, kann insbesondere aus einem wärmeleitfähigen Kunststoff oder einem metallischen Werkstoff bzw. Material bestehen. Bei Verwenden eines wärmeleitfähigen Kunststoffs kann dieser insbesondere eine Wärmleitfähigkeit λ von mehr als 5 W/(m • k) aufweisen.

Bei Vorsehen einer Beheizung der das zu temperierende bzw. temperierbare Volumen umgebenden Wandung mittels eines Widerstanddrahtes ist lediglich ein einzelner Draht zum Beheizen vorgesehen. Ein solcher Widerstandsdraht wird insbesondere konturnah zur Kontur des zu beheizenden Gegenstandes bzw. temperierbaren Volumens in die dieses umgrenzende Wandung eingebettet.

Bei Vorsehen von Heizbändern zum Beheizen der das zumindest eine temperierbare Volumen umgrenzenden Wandung können solche Heizbänder bzw. zumindest ein solches Heizband an der Wandung form- und/oder kraftschlüssig und/oder stoffschlüssig befestigt sein, beispielsweise durch Kleben, Schweißen oder eine kraftschlüssige Verbindung. Derartige Heizbänder werden somit nicht in die Wandung eingebettet, sondern innen oder außen auf dies aufgebracht bzw. an dieser befestigt, so dass beispielsweise auch ein Nachrüsten einer solchen Beheizung über zumindest ein Heizband an einer bereits bestehende Wandung z.B. eines Behälterhalters problemlos möglich ist.

Das zu temperierende Volumen kann allseitig von der zumindest einen Wandung und ggf. einem Verschlussdeckel zum Verschließen umgeben sein oder einseitig offen ausgebildet werden, somit lediglich beispielsweise umfangsseitig von der beheizbaren Wandung umgrenzt bzw. umschlossen sein. Gerade bei Ausbilden einer Behälteraufnahme kann diese somit einen Verschlussdeckel zum Verschließen der Behälteraufnahme aufweisen oder aber ohne einen solchen Verschlussdeckel ausgebildet sein. Insbesondere ist es möglich, nebeneinander mehrere solcher Behälteraufnahmen als temperierbare Volumina auszubilden, die jeweils von einer diese umgrenzenden Wandung oder aber von einer einzigen alle Behälteraufnahmen umgrenzenden Wandung umgeben sind.

Der Aufbau der dem Beheizen dienenden zumindest einen Wandung, die das temperierbare Volumen umgrenzt, kann dahingehend erfolgen, dass innenliegend, also in direktem Kontakt mit dem temperierbaren bzw. zu temperierenden Volumen, zumindest ein wärmeleitfähiger Kunststoff bzw. ein wärmeleitfähiges Polymermaterial mit darin eingebetteten elektrischen Leitern, Heizleitern bzw. Heizlitze(n) oder Leiterstruktur vorgesehen ist und außenliegend die Wandung eine Isolation aus nicht leitfähigem Kunststoffmaterial bzw. Polymermaterial bzw. Isolationsmaterial aufweist. Die Isolation konzentriert dabei die thermische Erwärmung auf den zu temperierenden Bereich, somit das zu temperierende bzw. temperierbare Volumen, das von der Wandung umgrenzt wird. Die zumindest eine Kühleinrichtung kann in direkter Anbindung bzw. direktem Kontakt mit dem wärmeleitfähigen Kunststoffmaterial bzw. Polymermaterial der Wandung vorgesehen werden in Ausbildung einer thermischen Reihenschaltung von Heizeinrichtung und Kühleinrichtung.

Ferner ist es möglich, dass die zumindest eine Kühleinrichtung so in thermischem Kontakt zu dem zumindest einen zu temperierenden bzw. temperierbaren Volumen angeordnet ist, dass unter Ausnutzen natürlicher Konvektion ein optimierter Wärmefluss vorgesehen ist oder sich einstellt. Bei der natürlichen Konvektion sinkt kalte Luft nach unten, so dass die zumindest eine Kühleinrichtung insbesondere auch in einem oberen Bereich der das zumindest eine zu temperierende bzw. temperierbare Volumen umgrenzenden Wandung angeordnet werden kann. Somit bildet sich ein sog. "Kältesee", der insbesondere in Kombination mit isolierenden Maßnahmen noch effizienter kühlt.

Eine solche Vorrichtung zum Temperieren zumindest eines temperierbaren bzw. zu temperierenden Volumens kann somit insbesondere ein Behälterhalter z.B. in einem Fahrzeuginnenraum sein. Ferner lässt sich die zumindest eine Kühleinrichtung, umfassend das zumindest eine thermoelektrische. Element, insbesondere Peltier-Element, beispielsweise in Verbindung mit einer Batteriekühlung eines Fahrzeugs anordnen. Ferner ist es möglich, dezentrale Kühlungen bzw. Kühleinrichtungen vorzusehen und diese mit der Vorrichtung zum Temperieren zu kombinieren bzw. zu kontaktieren, um die gewünschte Kühlfunktion zusätzlich zu der Heizfunktion, die über die Wandung, die das zumindest eine zu temperierende bzw. temperierbare Volumen umgrenzt, vorgesehen ist, zu erzielen, um ein effizientes Trennen von Kühlfunktion und Heizfunktion zu ermöglichen. Der Regelungsaufwand zum Abregeln insbesondere der Erwärmung bzw. des Heizens der Wandung kann durch ein intelligentes Material, wie ein Material mit einem PTC-Effekt, verringert werden. Ferner ist ein dynamisches Umschalten zwischen Heizbetrieb und Kühlbetrieb möglich, insbesondere auch das Beheizen eines temperierbaren Volumens und das Kühlen eines hierzu benachbart angeordneten temperierbaren Volumens, beispielsweise zweier Behälterhalter bzw. Getränkehalter in einem Fahrzeuginnenraum. Ein Kaltgetränk kann hierbei als das eine zu temperierende Volumen gekühlt und ein Heißgetränk als das andere zu temperierende Volumen beheizt bzw. heißgehalten werden.

Zur näheren Erläuterung der Erfindung werden im Folgenden Ausführungsbeispiele von dieser näher anhand der Zeichnungen beschrieben. Diese zeigen in:
- Figur 1: eine Prinzipskizze einer ersten Ausführungsform einer erfindungsgemäßen Vorrichtung zum Temperieren eines temperierbaren, von einer Wandung umgrenzten Volumens, in Ausführung als Behälteraufnahme,
- Figur 2: eine Längsschnittansicht durch die erfindungsgemäß ausgestaltete Behälteraufnahme gemäß Figur 1, in erster Ausführungsform,
- Figur 2a: eine Detailansicht der Behälteraufnahme gemäß Figur 2,
- Figur 3: eine Seitenansicht einer Ausführungsform einer erfindungsgemäßen Behälteraufnahme gemäß Figur 1, zur besseren Veranschaulichung in direkter Aufsicht auf die gewendelten elektrischen Leiter in der Wandung der Behälteraufnahme, somit durch einen Teil der Wandung hindurch,
- Figur 4: eine Querschnittsansicht durch eine dritte Ausführungsform der erfindungsgemäßen Behälteraufnahme gemäß Figur 1, und
- Figur 5: eine Querschnittsansicht durch eine erfindungsgemäße Einheit aus Wärmetauscher und Peltier-Element der Vorrichtung gemäß Figur 1.

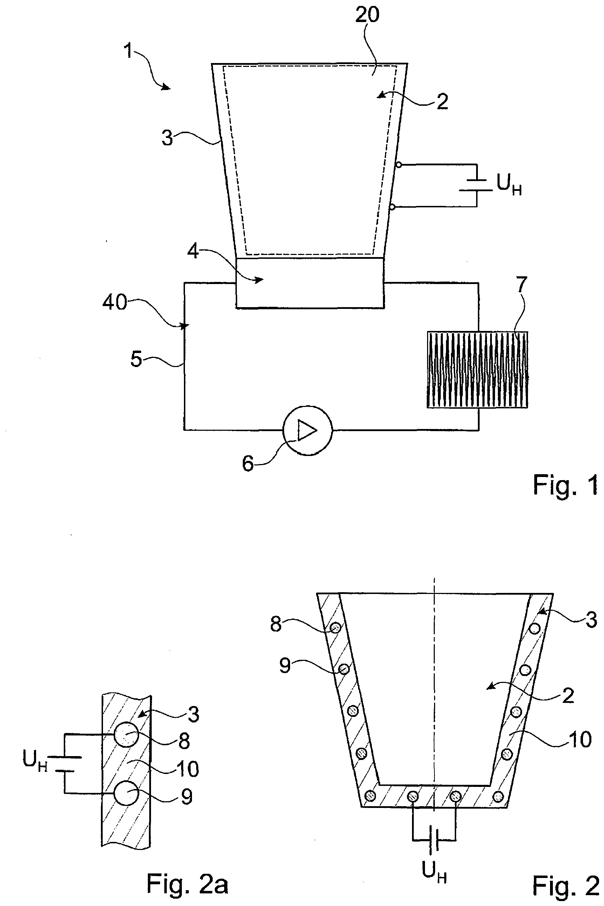

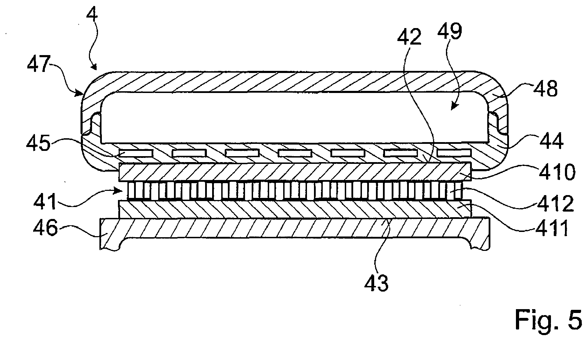

In Figur 1 ist ein System bzw. eine Vorrichtung 1 zum Temperieren eines temperierbaren Volumens 2 gezeigt, das von einer Wandung 3 umgrenzt wird. Die Wandung 3 weist hier die Formgebung einer Behälteraufnahme auf, wobei das temperierbare Volumen 2 das innere Volumen bzw. die thermische Masse der Behälteraufnahme ist, somit der innere Hohlraum der Behälteraufnahme, in den ein Behälter 20 eingefügt werden kann, wie er in Figur 1 gestrichelt angedeutet ist. Der Behälter 20 und dessen Inhalt, z.B. ein Getränk, wird somit bei Temperieren des temperierbaren Volumens 2 über die Wandung 3 temperiert bzw. insbesondere ein Medium in dem Behälter, wie beispielsweise eine Flüssigkeit, z.B. ein Getränk, wenn der Behälter 20 innerhalb der Wandung 3 angeordnet wird, in thermischem Kontakt mit der Wandung 3. Ein solches Getränk kann mittels der Vorrichtung 1 sowohl erhitzt als auch gekühlt werden. Zu diesem Zweck ist die Wandung 3 einerseits beheizbar, was in Figur 1 durch eine angelegte Heizspannung U_{H} angedeutet ist. An seiner Unterseite ist das temperierbare Volumen 2 auf eine Kühleinrichtung 4 aufgestellt bzw. eine solche an der Unterseite der als Behälteraufnahme geformten Wandung 3 angeordnet. Die Kühleinrichtung 4 umfasst ein Peltier-Element 41 und einen Wärmetauscher 47. Eine solche Einheit bzw. ein solcher Verbund aus Peltier-Element 41 und Wärmetauscher 47 ist in Figur 5 gezeigt. Die Kühleinrichtung 4 ist über eine Medienleitung 5 mit einer Fördereinrichtung 6 in Form einer Pumpe und mit einem zweiten Wärmetauscher 7, hier in Ausbildung eines Chillers, verbunden. Kühleinrichtung 4, Fördereinrichtung 6 und zweiter Wärmetauscher 7 bzw. Chiller sind Teile eines Kühlkreislaufs 40.

Der Kühlkreislauf 40 bzw. die Kühleinrichtung 4 dienen dem Kühlen des temperierbaren Volumens 2 bzw. eines darin angeordneten Behälters 20 bzw. eines darin aufgenommenen Mediums, wie eines Getränks. Es sind somit zwei voneinander getrennte Temperiereinrichtungen, eine Beheizung über die Wandung 3 und eine Kühleinrichtung 4 zum Kühlen, beide in thermischem Kontakt mit dem temperierbaren Volumen 2, vorgesehen, um eine Temperierung von diesem vorzunehmen. Die Kühleinrichtung 4 kann nicht nur, wie in Figur 1 angedeutet, an der Unterseite der Wandung 3 bzw. des temperierbaren Volumens 2 angeordnet sein, sondern auch seitlich an dieser oder an mehreren Stellen verteilt, um ein optimales Kühlen des zu temperierenden bzw. temperierbaren Volumens 2, das von der Wandung 3 umgrenzt wird, vorzusehen.

Über die Kühleinrichtung 4, die mit dem Kühlkreislauf 40 verbunden ist bzw. Teil von diesem ist, wird dem temperierbaren bzw. zu temperierenden Volumen 2 Wärme entzogen. Das im Innern der Medienleitung 5 strömende Kühlmedium wird vermittels der Fördereinrichtung 6 bzw. Pumpe durch den Kühlkreislauf 40 gefördert, so dass das im Bereich der Kühleinrichtung 4 erwärmte Kühlmedium zu dem zweiten Wärmetauscher 7 bzw. Chiller gelangt. Dort wird dem Kühlmedium Wärme entzogen, die insbesondere an die Umgebung oder aber an einen hier nicht gezeigten weiteren Temperierkreislauf abgegeben werden kann.

Beispielsweise kann diese Wärmeenergie in einem an den zweiten Wärmetauscher 7 angeschlossenen Temperierkreislauf zum Temperieren einer anderen Einrichtung, wie beispielsweise einer Batterie, dienen.

Zum Beheizen des temperierbaren bzw. zu temperierenden Volumens 2 können in die dieses umgrenzende Wandung 3 zwei elektrisch leitfähige Leiter 8, 9 eingebettet werden. Dies ist in Figur 2 und Figur 2a angedeutet. An diese Leiter 8, 9 wird eine Heizspannung U_{H} angelegt, wie dies ebenfalls den Figuren 2, 2a zu entnehmen ist. Das Material der Wandung kann 3beispielsweise ein elektrisch leitfähiger Kunststoff, also ein leitfähig dotiertes Kunststoffmaterial 10 bzw. Polymermaterial sein. Bei Herstellen der Wandung 3 im Spritzgussverfahren können die beiden elektrischen Leiter 8, 9 darin direkt bei der Herstellung der Wandung eingebettet werden.

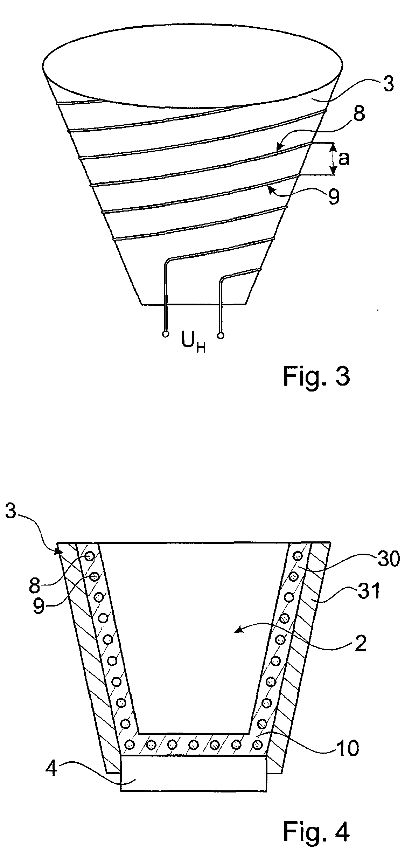

Wie insbesondere Figur 3 entnommen werden kann, ist es möglich, durch Wahl des Abstands a zwischen zwei Leitern 8, 9 bzw. Heizdrähten die Heizleistung, die zum Beheizen des temperierbaren Volumens bzw. zu temperierenden Volumens 2 zur Verfügung steht, einzustellen. Bei Wahl eines etwa gleichbleibenden Abstandes a zwischen den Heizdrähten 8, 9 kann eine konstante Heizleistung U_{H} eingestellt werden, unter Vermeiden von sogenannten Hotspots, also Stellen übermäßiger Erwärmung. Alternativ zu der in Figur 3 gezeigten Ausgestaltung können die elektrischen Leiter auch als metallische Formbiegeelemente ausgebildet und in die Wandung 3 eingebettet werden. Wie insbesondere Figur 3 zu entnehmen ist, sind die Heizdrähte 8, 9 konturnah zu dem zu temperierenden Volumen 2 angeordnet und geformt, folgen also der Formgebung der Wandung 3, die in sich das temperierbare bzw. zu temperierende Volumen, insbesondere einen Behälter 20, wie einen Becher, eine Getränkeflasche etc. aufnehmen kann.

Hierdurch ist ein optimaler Wärmeübergang auf das zu temperierende Volumen 2 bzw. einen in einem Behälterhalter angeordneten Behälter 20 und das darin aufgenommen Medium, insbesondere Getränk, möglich.

Wie Figur 4 zu entnehmen ist, ist ein mehrlagiges Ausbilden der Wandung 3 möglich, wobei hier beispielhaft eine innere Lage 30 der Wandung 3 aus einem leitfähigen Kunststoffmaterial 10 bzw. Polymermaterial, insbesondere elektrisch leitfähigen bzw. thermisch leitfähigen Polymer- oder Kunststoffmaterial ausgebildet ist, während eine äußere Lage 31 als Isolierschicht ausgebildet ist. Diese besteht somit aus einem thermisch isolierenden Material, um die thermische Erwärmung der Wandung 3 auf den zu temperierenden Bereich, somit das Innere der Wandung 3, in dem das zu temperierende Volumen 2 aufgenommen ist, zu konzentrieren. Die äußere Lage 31 oder äußere Schicht der Wandung 3 besteht daher vorteilhaft aus einem nicht leitfähigen Kunststoffmaterial oder einem anderen Isoliermaterial, kann auch als separater Mantel aus Isoliermaterial ausgebildet sein, der die Wandung 3 außenseitig umgibt. Es ist insbesondere möglich, die Wandung 3 zweilagig unter Verwendung des gleichen Kunststoffmaterials für die innere und die äußere Lage vorzusehen, wobei das Kunststoffmaterials für die innere Lage 30 leitfähig dotiert und das Kunststoffmaterial für die äußere Lage 31 nicht leitfähig dotiert ist, auszubilden. Ein Ausbilden im Spritzgussverfahren ist hierbei ebenfalls möglich. In die innere Lage 30 sind wiederum Heizdrähte bzw. elektrische Leiter 8, 9 oder eine Leiterstruktur oder Litzen eingebettet. Auch ein einzelner Widerstandsdraht kann zum Beheizen eingebettet sein, der insbesondere ebenfalls gewendelt im Inneren der Wandung umlaufend, ähnlich der Anordnung in Figur 3, vorgesehen sein kann.

Bei der in Figur 4 gezeigten Ausführungsvariante ist die Kühleinrichtung 4 in thermischem Kontakt mit dem leitfähigen Material der inneren Lage 30 der Wandung 3 an diese anschließend angeordnet. Die Kühleinrichtung 4 wird teilweise außenseitig von der äußeren, thermisch isolierenden Lage 31 der Wandung 3 umgeben. Hierdurch ist auch für die Kühleinrichtung ein thermisches Isolieren nach außen in die Umgebung möglich, so dass auch ein besonders effizientes Kühlen des temperierbaren bzw. zu temperierenden Volumens 2 hierüber erfolgen kann. Die Kühleinrichtung 4 ist aufgrund ihres direkten Kontakts zu der wärmeleitfähigen inneren Lage 30 der Wandung 3 thermisch in Reihe geschaltet mit der Heizeinrichtung zum Beheizen der Wandung 3.

Um ein Überhitzen bzw. übermäßiges Erhitzen der Wandung 3 zu vermeiden, kann als Kunststoffmaterial bzw. Polymermaterial für die Wandung 3 bzw. insbesondere die innere Lage 30 von dieser ein Material mit einem PTC-Effekt verwendet werden, bei dem sich Leitpfade im Kunststoffmaterial während des Erwärmens ausbilden, die bei Ausdehnung zu einem Abregeln, somit zu einem Unterbrechen der Beheizung führen. Beispielsweise kann dies bei Erreichen einer Maximaltemperatur von Tₘₐₓ = 55 bis 60 °C erfolgen, somit der PTC-Effekt bei Erreichen dieser Maximaltemperatur zu einem selbständigen Abschalten der Beheizung bzw. einem Abregeln der Beheizung führen. Hierzu ist keine weitere Regelungseinrichtung erforderlich.

In Figur 5 ist als Prinzipskizze der Aufbau der Kühleinrichtung 4 gezeigt. Diese umfasst ein Peltier-Element 41, das zwei Keramikplatten 410, 411 mit dazwischen angeordneten Halbleiterelementen 412 aufweist. Die Außenseite 42 der ersten Keramikplatte 410 und die Außenseite 43 der zweiten Keramikplatte 411 weisen jeweils eine modifizierte Oberfläche auf. An diese ist jeweils eine Kunststoffkontur angegliedert, einerseits eines Teils des Wärmetauschers 47 und andererseits zum Angliedern an der Wandung 3 oder an einem Teil von dieser. An seiner Außenseite 42 ist das Peltier-Element 41 mit einem Element 44 aus einem wärmeleitfähigen Kunststoffmaterial, das im Innem mit Kühlkanälen 45 versehen ist und das Teil des Wärmetauschers 47 ist, verbunden. An seiner Außenseite 43 ist das Peltier-Element 41 mit einem Konturelement 46 ebenfalls aus einem Kunststoffmaterial verbunden, das an eine Wärmequelle thermisch angekoppelt wird, nämlich die Wandung 3. Dementsprechend wird die Kühleinrichtung 4 bzw. das Peltier-Element 41 mit seiner Außenseite 43 insbesondere mit dem leitfähigen Material der inneren Lage 30 der Wandung 3 bzw. der aus einem leitfähigen Material bestehenden Wandung 3, die das temperierbare oder zu temperierende Volumen 2 umgrenzt, in Kontakt gebracht, um über thermische Leitung dem temperierbaren oder zu temperierenden Volumen 2 Wärme zu entziehen. Über das Peltier-Element 41 gelangt die Wärme zu dem wärmeleitfähigen Kunststoff des Elementes 44 und in die Kühlkanäle 45 in diesem hinein. Über das in den Kühlkanälen 45 strömende Kühlmedium ist ein Abtransport der Wärme über die Medienleitung 5 und die Fördereinrichtung 6 hin zum zweiten Wärmetauscher 7 bzw. Chiller und von diesem in die Umgebung oder, wie bereits erwähnt, in einen weiteren Temperierkreislauf möglich.

In der in Figur 5 gezeigten Ausführungsvariante der Kombination aus Peltier-Element und Wärmetauscher 47, der das Element 44 aus wärmeleitfähigem Kunststoff mit darin eingebetteten Kühlkanälen 45 umfasst, ist dieses Element 44 aus wärmeleitfähigem Kunststoffmaterial mit einem Abdeckelement 48 verbunden bzw. insbesondere dieses auf das Element 44 aus wärmeleitfähigem Kunststoffmaterial aufgeklipst unter Belassen eines inneren Hohlraums 49 zwischen dem Abdeckelement 48 und dem Element 44 aus wärmeleitfähigem Kunststoffmaterial. Beispielsweise kann dieser innere Hohlraum 49 zwischen dem Abdeckelement 48 und dem Element 44 aus wärmeleitfähigem Kunststoffmaterial mit Luft durchströmt werden, um auch hierüber einen Abtransport von Wärme aus der Kühleinrichtung 4 heraus zu ermöglichen.

Zum Beheizen der Wandung 3 können auch ein oder mehrere Heizbänder auf der Außen- und/oder Innenseite der Wandung 3 befestigt werden, beispielsweise durch stoffschlüssiges, formschlüssiges oder auch kraftschlüssiges Verbinden, beispielsweise dort aufgeklebt oder mit der Wandung verschweißt werden. Hierüber kann ebenfalls ein Beheizen der Wandung 3 vorgesehen werden und weiterhin ein Trennen eines Beheizens des temperierbaren bzw. zu temperierenden Volumens 2 innerhalb der Wandung 3 und eines Kühlens von diesem durch die getrennt von der Beheizung betreibbare und angeordnete Kühleinrichtung 4.

Neben den im Vorstehenden beschriebenen und in den Figuren gezeigten Ausführungsvarianten einer Vorrichtung bzw. eines Systems zum Temperieren eines temperierbaren bzw. zu temperierenden Volumens, das von zumindest einer Wandung umgrenzt wird, können noch zahlreiche weitere, auch beliebige Kombinationen der vorstehend genannten Merkmale, gebildet werden, bei denen jeweils eine Trennung von Kühlfunktion und Heizfunktion der Vorrichtung zum Temperieren vorgesehen ist, wobei die zumindest eine Wandung, die das zu temperierende bzw. temperierbare Volumen umgrenzt, zum Beheizen von diesem dient und zumindest eine Kühleinrichtung zum Kühlen des temperierbaren bzw. zu temperierenden Volumens separat von der Beheizung vorgesehen ist.

### Bezugszeichenliste

- 1: Vorrichtung
- 2: temperierbares Volumen
- 3: Wandung
- 4: Kühleinrichtung
- 5: Medienleitung
- 6: Fördereinrichtung/Pumpe
- 7: zweiter Wärmetauscher/Chiller
- 8: erster Heizdraht
- 9: zweiter Heizdraht
- 10: leitfähig dotiertes Kunststoffmaterial
- 20: Behälter
- 30: innere Lage
- 31: äußere Lage/Isolierschicht
- 40: Kühlkreislauf
- 41: Peltier-Element
- 42: Außenseite
- 43: Außenseite
- 44: Element aus wärmeleitfähigem Kunststoffmaterial
- 45: Kühlkanal
- 46: Konturelement
- 47: Wärmetauscher
- 48: Abdeckelement
- 49: innerer Hohlraum
- 410: Keramikplatte
- 411: Keramikplatte
- 412: Heizleiterelement
- U_{H}: Heizspannung
- a: Abstand zwischen 8 und 9

## Patentansprüche

1. Vorrichtung (1) zum Temperieren zumindest eines temperierbaren oder zu temperierenden Volumens (2), umfassend zumindest eine das temperierbare Volumen (2) umgrenzende Wandung (3),
**dadurch gekennzeichnet, dass**
eine Trennung von Kühl- und Heizfunktion der Vorrichtung (1) zum Temperieren vorgesehen ist, wobei die zumindest eine Wandung (3) zum Beheizen des zumindest einen temperierbaren oder zu temperierenden Volumens (2) beheizbar ist und zumindest eine Kühleinrichtung (4) zum Kühlen des temperierbaren Volumens (2) vorgesehen ist.

2. Vorrichtung (1) nach Anspruch 1,
**dadurch gekennzeichnet, dass**
die zumindest eine Kühleinrichtung (4) zumindest ein thermoelektrisches Element (41), insbesondere Peltier-Element, und zumindest einen Wärmetauscher (47) zum Abführen von Wärme von dem thermoelektrischen Element (41) umfasst, insbesondere der Wärmetauscher (47) ein Luft-Wärmetauscher und/oder ein mediumdurchströmter Wärmetauscher ist.

3. Vorrichtung (1) nach Anspruch 1 oder 2,
**dadurch gekennzeichnet, dass**
die zumindest eine Kühleinrichtung (4) in thermisch leitfähigem Kontakt mit dem temperierbaren oder zu temperierenden Volumen (2) und/oder der zumindest einen das temperierbare oder zu temperierende Volumen (2) umgrenzenden Wandung (3) steht.

4. Vorrichtung (1) nach einem der vorstehenden Ansprüche,
**dadurch gekennzeichnet, dass**
ein Kühlkreislauf (40) vorgesehen ist, der zumindest eine Fördereinrichtung (6) zum Fördern eines Kühlmediums (40) durch den Kühlkreislauf und zumindest einen zweiten Wärmetauscher (7), insbesondere einen Chiller, zum Umwandeln der im Kühlmedium aufgenommenen Wärmeenergie und zur Abgabe derselben an die Umgebung oder zumindest einen Sekundärkreislauf umfasst.

5. Vorrichtung (1) nach einem der vorstehenden Ansprüche,
**dadurch gekennzeichnet, dass**
die zumindest eine Wandung (3) zum Beheizen des zumindest einen temperierbaren oder zu temperierenden Volumens (2) zumindest ein thermisch und/oder elektrisch leitfähiges Material (10) mit darin eingebetteten oder daran befestigten elektrisch leitfähigen Elementen (8,9) umfasst.

6. Vorrichtung (1) nach Anspruch 5,
**dadurch gekennzeichnet, dass**
die elektrisch leitfähigen Elemente (8,9) zumindest eine Litze und/oder zumindest ein Leiter und/oder zumindest eine Leiterstruktur und/oder zumindest ein Heizband sind.

7. Vorrichtung (1) nach Anspruch 5 oder 6,
**dadurch gekennzeichnet, dass**
das thermisch leitfähige Material (10) und/oder elektrisch leitfähige Material (10) ein leitfähiges Polymermaterial ist, insbesondere das elektrisch leitfähige Polymermaterial (10) der zumindest einen Wandung einen PTC-Effekt zeigt zum selbständigen Abregeln der Beheizung bei Erreichen einer vorgebbaren Maximaltemperatur.

8. Vorrichtung (1) nach einem der vorstehenden Ansprüche,
**dadurch gekennzeichnet, dass**
die zumindest eine Wandung (3) zum Beheizen des zumindest einen temperierbaren oder zu temperierenden Volumens (2) außenseitig mit zumindest einer thermischen Isoliereinrichtung (31) versehen ist.

9. Vorrichtung (1) nach einem der Ansprüche 5 bis 8,
**dadurch gekennzeichnet, dass**
die elektrisch leitfähigen Elemente (8,9), insbesondere elektrischen Leiter, bezüglich der Formgebung der zumindest einen das zumindest eine temperierbare oder zu temperierende Volumen (2) umgrenzenden Wandung (3) konturnah und/oder äquidistant zueinander untereinander ohne elektrischen Kontakt in der Wandung (3) angeordnet sind.

10. Vorrichtung (1) nach einem der Ansprüche 5 bis 9,
**dadurch gekennzeichnet, dass**
die elektrisch leitfähigen Elemente (8,9), insbesondere elektrischen Leiter, als metallische Formbiegeelemente ausgebildet und in die zumindest eine Wandung (3) eingebettet sind.

11. Vorrichtung (1) nach einem der Ansprüche 5 bis 9,
**dadurch gekennzeichnet, dass**
ein elektrischer Widerstandsdraht zum Beheizen vorgesehen ist.

12. Vorrichtung (1) nach einem der vorstehenden Ansprüche,
**dadurch gekennzeichnet, dass**
die zumindest eine Kühleinrichtung (4) so in thermischem Kontakt zu dem temperierbaren oder zu temperierenden Volumen (2) angeordnet ist, dass unter Ausnutzen natürlicher Konvektion ein optimierter Wärmefluss vorgesehen ist oder sich einstellt.

13. Vorrichtung (1) nach einem der vorstehenden Ansprüche,
**dadurch gekennzeichnet, dass**
die Vorrichtung (1) zum Temperieren mit zumindest einem Mittel zur Zufuhr von Wärme und zumindest einem Mittel zur Abfuhr von Wärme und/oder zur Zufuhr von Kälte versehbar oder versehen ist.

14. Von zumindest einer Wandung (3) umgrenztes temperierbares oder zu temperierendes Volumen (2), insbesondere Behälteraufnahme zur Aufnahme zumindest eines Behälters (20),
**dadurch gekennzeichnet, dass**
zum Beheizen und Kühlen des temperierbaren oder zu temperierenden Volumens (2) zumindest eine Vorrichtung (1) nach einem der vorstehenden Ansprüche vorgesehen ist.

15. Fahrzeug mit zumindest einer Vorrichtung (1) nach einem der Ansprüche 1 bis 13 und/oder zumindest einem temperierbaren oder zu temperierenden Volumen (2) nach Anspruch 14.
